# EUROPÄISCHE PATENTSCHRIFT

(11) **EP 3 403 003 B1**
(45) Veröffentlichungstag und Bekanntmachung des Hinweises auf die Patenterteilung: **02.09.2020**
(21) Anmeldenummer: 17700046.0
(22) Anmeldetag: 04.01.2017
(51) Int. Cl.: F16H 3/091, F16H 57/033

(54) **KRAFTFAHRZEUGGETRIEBE FÜR DEN LÄNGSEINBAU IN EINEM KRAFTFAHRZEUG**
MOTOR VEHICLE TRANSMISSION FOR LONGITUDINAL INSTALLATION IN A MOTOR VEHICLE
BOÎTE DE VITESSES DE VÉHICULE AUTOMOBILE DEVANT ÊTRE MONTÉE LONGITUDINALEMENT DANS UN VÉHICULE AUTOMOBILE

(30) Priorität: 13.01.2016 DE 102016100475
(43) Veröffentlichungstag der Anmeldung: 21.11.2018
(73) Patentinhaber: Magna PT B.V. & Co. KG, 74199 Untergruppenbach (DE)
(72) Erfinder: PRELLEZO, Rafael, 71665 Vaihingen a.d. Enz (DE); BROSI, Matthias, 71720 Oberstenfeld (DE)
(74) Vertreter: Rausch, Gabriele
(86) Internationale Anmeldenummer: PCT/EP2017/050105
(87) Internationale Veröffentlichungsnummer: WO 2017/121664

(56) Entgegenhaltungen:
- EP-A2- 1 122 463

## Beschreibung

Die vorliegende Erfindung betrifft ein Kraftfahrzeuggetriebe für den Längseinbau in einem Kraftfahrzeug, mit einer Eingangswellenanordnung, die mit einem Ausgangsglied einer Kupplungsanordnung verbindbar ist; einer Ausgangswelle, die mit Antriebsrädern oder mit einem Differential verbindbar ist; einer Vorgelegewelle, die parallel zu der Eingangswellenanordnung angeordnet ist; einer Mehrzahl von Radsätzen zum Einrichten von Gangstufen, wobei die Radsätze jeweils an zwei der Wellen gelagert und mittels jeweiliger Schaltkupplungen schaltbar sind, die zumindest teilweise zu Schaltkupplungspaketen zusammengefasst sind; einem Gehäuse, in dem die Wellen und die Radsätze aufgenommen sind; und einer Lageranordnung zum Lagern der Wellen an dem Gehäuse, die so ausgebildet ist, dass mit dieser Lageranordnung gleichermaßen eine erste Variante und eine zweite Variante des Kraftfahrzeuggetriebes aufbaubar ist, wobei das Kraftfahrzeuggetriebe in der ersten Variante mit einer ersten Anzahl von Vorwärtsgangstufen aufbaubar ist und in der zweiten Variante mit diesen Vorwärtsgangstufen und einer weiteren Vorwärtsgangstufe aufbaubar ist.

Derartige Kraftfahrzeuggetriebe sind beispielsweise bekannt aus der DE 10 2005 005 338 B3. Bei diesen bekannten Getrieben handelt es sich um sog. Inline-Getriebe, also Getriebe für den Längseinbau in einem Kraftfahrzeug. Dabei sind die Getriebe in einer ersten Variante mit sechs Gängen derart aufbaubar, dass sie mittels einer klassischen Schaltkulisse manuell schaltbar sind, also dass Schaltkupplungspakete benachbarte Gangstufen schalten. In einer weiteren Variante sind diese bekannten Getriebe mit einer weiteren Vorwärtsgangstufe als Automatikschaltgetriebe aufbaubar.

Diese bekannten Getriebe sind wenig modular und eng auf ihren Anwendungsbereich angepasst.

Getriebe werden teilweise speziell auf Kundenanforderung entwickelt und gebaut. Dabei wird viel Arbeits- und Entwicklungsaufwand benötigt, so dass sich eine Produktion von kundenspezifischen Getrieben in Kleinserie wirtschaftlich kaum lohnt.

Bisherige Getriebekonzepte ermöglichen nur geringfügig das Ausnutzen von Synergien. Zudem sind konventionelle Getriebe geometrisch an ihren Grenzen, um durch große Spreizung zukünftige CO₂ Anforderungen zu erfüllen und die Drehmomententwicklung neuer Motorengenerationen zu berücksichtigen.

Die EP 1 122 463 A2 offenbart ein modulares Kraftfahrzeuggetriebe, welches unter den Wortlaut des Oberbegriffs des Anspruchs 1 fällt.

Vor dem obigen Hintergrund ist es die Aufgabe der Erfindung, ein verbessertes und wirtschaftliches Inline-Getriebe bereitzustellen, mit dem möglichst viele verschiedene Ausführungsformen, also spezielle Kundenwünsche, realisierbar sind.

Diese Aufgabe wird durch ein modulares Kraftfahrzeuggetriebe nach Anspruch 1 gelöst. Die abhängigen Ansprüche betreffen besondere Ausführungsarten der Erfindung nach Anspruch 1.

Durch diese Maßnahme ergibt sich eine hohe Modularität, so dass anforderungsspezifisch viele verschiedene Ausführungsformen durch das offenbarte modulare Getriebe realisiert werden können. Beide Varianten können sowohl von Hand als auch automatisiert betätigt werden.

Die Aufgabe wird somit vollkommen gelöst.

Von besonderem Vorteil ist es, wenn in beiden Varianten eine Direktgangstufe eingerichtet ist.

Dadurch kann eine weitere Gangstufe ohne zusätzliches Radsatzpaar eingerichtet werden, so dass das Getriebe axial kurz baut. Zudem können Kosten und Gewicht eingespart werden.

Durch den in Anspruch 1 genannten Abtriebs-Konstantenradsatz sind die Momentbelastungen an der Vorgelegewelle geringer als bei einem Antriebs-Konstantenradsatz, so dass die Verzahnungen der Radsätze schmaler ausgeführt werden können. Dadurch kann das Getriebe generell in axialer Richtung kürzer ausgebildet sein. Zudem sind die Belastungen der Schaltkupplungen geringer, wodurch kürzere Schaltzeiten realisiert werden können.

Mit der Erfindung ergibt sich eine Lagerung der Abtriebswelle mit einem günstigen Tragbild, wobei eine sehr steife Lagerung des Abtriebs-Konstantenradsatzes erreicht wird. Zudem ergibt sich in der Regel eine günstige Lagerbelastung.

Eine weitere bevorzugte Ausführungsform sieht vor, dass der Getriebedeckel des Gehäuses und/oder die Lagerplatte in beiden Varianten aus identischen Teilen gefertigt werden können und bevorzugt identisch sind.

Durch diese Maßnahme lassen sich weitere Synergien generieren, so dass auch Getriebe in Kleinserie noch wirtschaftlicher realisierbar sind. Durch die Verwendung von Gleichteilen können diese Gleichteile in größeren Stückzahlen produziert werden, was die Produktionskosten weiter senkt. Des Weiteren reduziert die Verwendung von Gleichteilen den Lageraufwand im Ersatzteillager sowie den Verwaltungsaufwand der Lagerbestände, was die Kosten weiter senken und die Wirtschaftlichkeit weiter verbessern kann.

Von besonderem Vorteil ist es dabei, wenn in der ersten Variante ein Rückwärtsgangstufen-Radsatz der einem Eingang des Kraftfahrzeuggetriebes nächste Radsatz ist und mittels einer Rückwärtsgangstufen-Schaltkupplung betätigbar ist, die auf der dem Getriebeeingang zugewandten Seite des Rückwärtsgangstufen-Radsatzes angeordnet ist, wobei in der zweiten Variante ein Radsatz für die weitere Vorwärtsgangstufe auf der dem Getriebeeingang zugewandten Seite einer Rückwärtsgangstufen-Schaltkupplung angeordnet ist, wobei die Rückwärtsgangstufen-Schaltkupplung mit einer weiteren Schaltkupplung für die weitere Gangstufe in ein Schaltkupplungspaket integriert ist.

Durch diese Maßnahme baut auch die zweite Variante des Inline-Getriebes axial kurz. Zudem kann die zusätzliche Vorwärtsgangstufe der zweiten Variante konstruktiv günstig realisiert werden.

Gemäß einer bevorzugten Ausführungsform sind in der ersten Variante folgende Bauelemente axial hintereinander angeordnet, von einem Getriebeeingang aus gesehen: eine Rückwärtsgangstufen-Schaltkupplung, ein Rückwärtsgangstufen-Radsatz, ein Radsatz für Gangstufe 1, ein Schaltkupplungspaket für Gangstufen 1 und 2, ein Radsatz für Gangstufe 2, ein Radsatz für Gangstufe 5, ein Schaltkupplungspaket für Gangstufen 5 und 6, ein Radsatz für Gangstufe 6, ein Radsatz für Gangstufe 3, ein Schaltkupplungspaket für Gangstufen 3 und 4, und ein Abtriebs-Konstantenradsatz.

Durch diese vorteilhafte Fahrzeuggetriebeanordnung ist es möglich das Kraftfahrzeuggetriebe mit einer H-Schaltkulisse zu schalten, wobei Schaltstangen direkt mit Schaltgabeln verbindbar sind, wobei keine Umlenkung/Richtungsumkehr der Betätigungsrichtung einer Schaltkupplung realisiert werden muss. Das Getriebe kann demnach mechanisch einfach geschaltet werden.

Gemäß einer weiteren bevorzugten Ausführungsform sind in der zweiten Variante folgende Bauelemente axial hintereinander angeordnet, von einem Getriebeeingang aus gesehen: ein Radsatz für Gangstufe 7, ein Schaltkupplungspaket für Gangstufe 7 und die Rückwärtsgangstufe R, ein Rückwärtsgangstufen-Radsatz, ein Radsatz für Gangstufe 1, ein Schaltkupplungspaket für Gangstufen 1 und 2, ein Radsatz für Gangstufe 2, ein Radsatz für Gangstufe 4, ein Schaltkupplungspaket für Gangstufen 4 und 3, ein Radsatz für Gangstufe 3, ein Radsatz für Gangstufe 6, ein Schaltkupplungspaket für die Gangstufen 6 und 5, und ein Abtriebs-Konstantenradsatz.

Durch dieses vorteilhafte Radsatzlayout ist es möglich das Getriebe auch in der zweiten Variante, also mit 7 Gangstufen, derart aufzubauen, dass es manuell mittels einer H-Schaltkulisse schaltbar ist, da die Schaltkupplungspakete jeweils benachbarte Gangstufen schalten.

Von besonderem Vorzug ist es, wenn wenigstens ein Schaltkupplungspaket mittels einer Schaltgabel betätigbar ist und/oder wenigstens ein Schaltkupplungspaket mittels Schaltwippe betätigtbar ist. Die Betätigung kann jeweils mittels einer Schaltstange erfolgen oder beispielsweise mittels einer Seilzugschaltung und Mitnehmervorrichtung bzw. Koppelstück.

Eine Schaltwippe ist dabei an einer um eine quer zur Schaltstange ausgerichtete Umlenkachse (Umlenkvorrichtung) derart gelagert, dass bei einer Betätigung (beispielsweise mittels einer Schaltstange) in eine erste axiale Richtung durch die Umlenkvorrichtung das der Schaltwippe zugeordnete Schaltkupplungspaket in einer zu der ersten Richtung entgegengesetzten axialen Richtung verschoben wird. In der zweiten Variante ist es bevorzugt, wenn das Schaltkupplungspaket für die Gangstufen 1/2 mittels einer Schaltgabel geschaltet wird und die Schaltkupplungspakete für die Gangstufen 4/3 und 6/5 mittels jeweiliger Schaltwippen schaltbar sind.

Vorteilhaft dabei ist, dass auch das Radsatzlayout der zweiten Variante konstruktiv einfach manuell schaltbar ausgeführt sein kann.

Von besonderem Vorzug ist es, wenn der/ein Radsatz für die Gangstufe 1, der/ein Rückwärtsgangradsatz und vorzugsweise der/ein Radsatz für die Gangstufe 2 in beiden Varianten durch Gleichteile gebildet sind.

Dadurch können weitere Synergien generiert werden, wodurch die Wirtschaftlichkeit der Kraftfahrzeuggetriebe weiter verbessert werden kann.

Ausführungsbeispiele der Erfindung sind in den Zeichnungen dargestellt und werden in der nachfolgenden Beschreibung näher erläutert. Es zeigen:
Fig. 1 eine schematische Darstellung einer Ausführungsform des erfindungsgemäßen Kraftfahrzeuggetriebes in einer ersten Variante, wobei der Radsatzaufbau für ein 6-Gang-Handschaltgetriebe geeignet ist; und
Fig. 2 eine schematische Darstellung einer weiteren Ausführungsform des erfindungsgemäßen Kraftfahrzeuggetriebes in einer zweiten Variante, wobei der Radsatzaufbau für ein 7-Gang-Handschaltgetriebe geeignet ist.

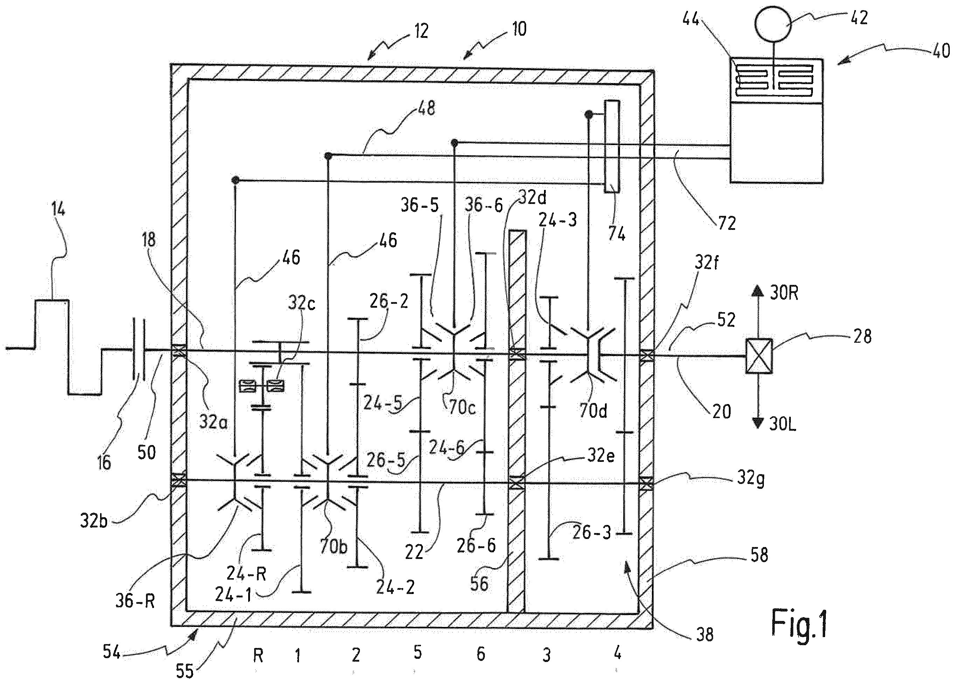

Fig. 1 zeigt ein Kraftfahrzeuggetriebe 10 in einem schematisch dargestellten Antriebsstrang 12. Dabei ist ein Antriebsmotor 14 schematisch als Brennkraftmaschine dargestellt. Es versteht sich, dass auch ein Elektromotor, eine Hybrideinheit oder andere bekannte Antriebsmotoren verwendet werden können.

Der Antriebsmotor 14 ist über eine Kupplungsanordnung 16 mit einem Eingang des Kraftfahrzeuggetriebes 10 verbindbar. Bei geschlossener Kupplungsanordnung 16 wird eine Eingangswelle 18 des Kraftfahrzeuggetriebes 10 durch den Antriebsmotor 14 angetrieben. Eine Ausgangswelle des Kraftfahrzeuggetriebes ist mit 20 bezeichnet.

Die Eingangswelle 18 ist parallel zu einer Vorgelegewelle 22 des Kraftfahrzeuggetriebes 10 angeordnet und ist durch mehrere Radsätze mit der Vorgelegewelle 22 verbunden, die jeweils zumindest ein Losrad 24 und ein Festrad 26 aufweisen.

Die Vorgelegewelle 22 ist drehfest mit der Ausgangswelle 20 verbunden, wobei die Ausgangswelle 20 über ein Differential 28 oder direkt mit den Antriebsrädern 30R, 30L verbunden ist.

Die Eingangswelle 18, die Ausgangswelle 20 und die Vorgelegewelle 22 sind jeweils durch Lageranordnungen 32 gelagert.

Die einzelnen Gangstufen sind jeweils durch Schaltkupplungen 36 einlegbar, wobei durch das Einlegen einer Schaltkupplung 36 das entsprechende Losrad 24 drehfest mit der entsprechenden Welle 18, 22 verbunden wird.

Das Getriebe weist einen Abtriebs-Konstantenradsatz 38 auf. Die Antriebsleistung wird also über ein Zahnradpaar bestehend aus zwei Festrädern von der Vorgelegewelle 22 auf die Ausgangswelle 20 übertragen.

Das in Fig. 1 gezeigte Getriebe ist mit einer manuellen H-Schaltvorrichtung betätigbar, die allgemein mit 40 bezeichnet ist und einen Schalthebel 42 aufweist, der in einer Schaltkulisse 44 verschiebbar ist und z.B. Schaltgabeln 46 über Schaltstangen 48 betätigen kann.

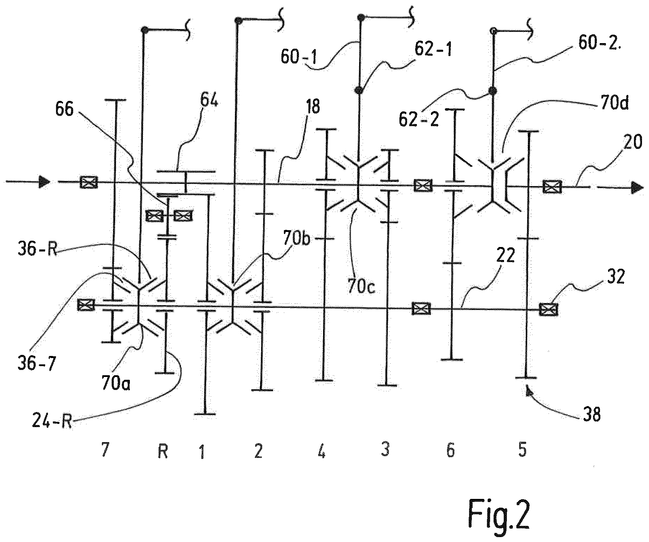

Die mit den jeweiligen Radsätzen schaltbaren Gangstufen sind in Fig. 1 und Fig. 2 jeweils unterhalb der Radsätze angegeben. In der in Fig. 1 gezeigten Variante ist die 4. Gangstufe als Direktgang eingerichtet. In einer in Fig. 2 gezeigten Variante ist die 5. Gangstufe als Direktgang eingerichtet. Es ist also jeweils die dritthöchste Gangstufe als Direktgang eingerichtet. Dadurch ist eine hohe Spreizung des Getriebes 10 möglich. Unter einem Direktgang wird verstanden, dass die Eingangswelle 18 ohne Zwischenübersetzung mit der Ausgangswelle 20 drehfest verbunden ist.

Das Getriebe 10 weist einen Getriebeeingang 50 auf, durch den Antriebsleistung in das Getriebe 10 eingebracht werden kann. Das Getriebe 10 weist weiter einen Getriebeausgang 52 auf, über den Antriebsleistung vom Getriebe 10 auf das Differential 28 oder direkt auf die Antriebsräder 30R, 30L übertragen werden kann.

Das Getriebe 10 weist weiter ein Getriebegehäuse 54 auf, wobei das Getriebegehäuse 54 einen Gehäusetopf 55, eine Lagerplatte 56 und einen Gehäusedeckel 58 aufweist.

Die Vorgelegewelle 22 ist mit insgesamt drei Lagern 32b, 32e, 32g an dem Getriebeeingang 50, der Lagerplatte 56 und dem Gehäusedeckel 58 gelagert. Die Ausgangswelle 20 ist am Gehäusedeckel 58 durch das Lager 32f gelagert und ist vorzugsweise zusätzlich in oder an der Eingangswelle 18 gelagert, was in Fig. 1 nicht näher dargestellt ist. Die Eingangswelle 18 und die Ausgangswelle 20 sind dabei koaxial angeordnet.

In dem Fall, dass die Ausgangswelle 20 in der Eingangswelle 18 gelagert ist, ist die Eingangswelle 18 mit zwei Lagern 32a, 32d gelagert, wobei das Lager 32a am Getriebeeingang angeordnet ist und das Lager 32d an der Lagerplatte 56 angeordnet ist.

Die Ausgangswelle 20 kann auch an der Eingangswelle 18 gelagert sein. In diesem Fall ist die Ausgangswelle 20 mit zwei Lagern 32d, 32e gelagert, wobei das Lager 32e am Getriebeausgang 52 angeordnet ist und das Lager 32d an der Lagerplatte 56 angeordnet ist.

Die Lagerplatte 56 ist dabei so angeordnet, dass zwischen Getriebeausgang 52 und Lagerplatte 56 der Abtriebs-Konstantenradsatz 38 und ein weiterer Radsatz 24/26 für eine Gangstufe angeordnet sind.

Die Schaltkupplungen 36 können auch über eine Schaltwippe 60 betätigt werden. Eine Schaltwippe 60 ist dabei derart an einer Umlenkvorrichtung 62 gelagert, dass bei einer

Betätigung einer Schaltstange 48 in einer ersten axialen Richtung durch die Umlenkvorrichtung 62, die der Schaltwippe 60 zugeordnete Schaltkupplung 36 in einer zu der ersten Richtung entgegengesetzten axialen Richtung verschoben wird.

In der in Fig. 1 gezeigten 6-Gang Variante ist die Gangstufe 1 durch ein an der Eingangswelle 18 angeordnetes Festrad 64 eingerichtet, das mit einem an der Vorgelegewelle 22 angeordneten Losrad 24-1 im Eingriff steht. Das Festrad 64 steht dabei zudem im Eingriff mit einem Richtungsumkehrrad 66, das wiederum mit einem an der Vorgelegewelle 22 angeordnetem Losrad 24-R in Eingriff steht, um so die Rückwärtsgangstufe-R einzurichten. Die Gangstufe 2 ist ebenfalls über ein an der Eingangswelle 18 angeordnetes Festrad 26-2 eingerichtet, das mit einem an der Vorgelegewelle 22 angeordneten Losrad 24-2 in Eingriff steht. Die Gangstufen 5 und 6 sind jeweils eingerichtet durch an der Eingangswelle angeordnete Losräder 24-5, 24-6 die mit an der Vorgelegewelle 22 angeordneten Festrädern 26-5, 26-6 in Eingriff stehen. Die Gangstufe 3 ist eingerichtet durch ein an der Eingangswelle 18 angeordnetes Losrad 24-3, das mit einem an der Vorgelegewelle 22 angeordnetem Festrad 26-3 im Eingriff steht.

Einzelne Schaltkupplungen 36 können vorzugsweise in so genannten Schaltkupplungspaketen 70 zusammengefasst sein, wobei ein Schaltkupplungspaket 70 in einer ersten axialen Richtung verschoben werden kann um eine erste Gangstufe einzulegen und in einer zweiten, zu der ersten entgegengesetzten, axialen Richtung verschoben werden kann um eine zweite Gangstufe einzulegen.

In der in Fig. 1 gezeigten Variante sind die einzelnen Vorwärtsgangstufen mittels Schaltkupplungspaketen 70b, 70c, 70d schaltbar. Die Gangstufen 1 und 2 sind dabei vom Schaltkupplungspaket 70b schaltbar, die Gangstufen 3 und 4 vom Schaltkupplungspaket 70d und die Gangstufen 5 und 6 vom Schaltkupplungspaket 70c. Die Rückwärtsgangstufe-R ist mittels einer Schaltkupplung 36-R schaltbar. In dieser Variante ist die Gangstufe 4 als Direktgangstufe ausgebildet.

Die Getriebeanordnung ist mit einer H-Schaltvorrichtung 40 betätigbar, die in Fig. 1 nur schematisch dargestellt ist. Die Schaltvorrichtung kann in an sich bekannter Weise betätigt werden und weist einen Schalthebel 42 auf, der in einer Schaltkulisse 44 beweglich angeordnet ist. Durch den Schalthebel 42 kann eine Schaltwelle 72 derart betätigt werden, dass eine Schaltwelle 74 mit einer der Schaltstangen 48 koppelt, so dass bei einer Bewegung des Schalthebels 42 entlang einer Schaltgasse die jeweilige Schaltstange 48 in axialer Richtung verschoben wird. Hierdurch verschiebt die Schaltstange 48 beispielsweise über eine Schaltgabel 46 oder eine Schaltwippe 60, eine Schaltmuffe eines Schaltkupplungspaketes 70, so dass eine Gangstufe eingelegt oder ausgelegt wird.

In Fig. 2 sind zur besseren Übersicht die Schaltvorrichtung 40, das Getriebegehäuse 54, die Lagerplatte 56 sowie Teile des Antriebsstranges 12 nicht dargestellt.

Fig. 2 zeigt schematisch ein Radsatzlayout für eine 7-Gang-Variante. Dabei sind die Schaltkupplungen 36-7 und 36-R für die Gangstufe 7 und die Rückwärtsgangstufe-R zu einem Schaltkupplungspaket 70a zusammengefasst. Die Rückwärtsgangstufe ist, wie in der in Fig. 1 gezeigten Variante, über das Radsatzpaar 64/66/24-R eingerichtet, wobei ein Festrad 64 für die Gangstufe 1 und die Rückwärtsgangstufe an der Getriebeeingangswelle 18 angeordnet ist und über ein Richtungsumkehrrad 66 mit einem Losrad 24-R in Eingriff steht. Das Losrad 24-R ist an der Vorgelegewelle 22 angeordnet und mit dem Schaltkupplungspaket 70a mit der Vorgelegewelle 22 drehfest verbindbar.

Die Radsätze der Gangstufen 1 und 2 und der Rückwärtsgangstufe-R sind vorzugsweise identisch zu denen in der 6-Gang-Variante, wie in der Fig. 1 gezeigt.

Die Gangstufen 4 und 3 sind jeweils eingerichtet durch an der Eingangswelle angeordnete Losräder 24-4, 24-3 die mit an der Vorgelegewelle 22 angeordneten Festrädern 26-4, 26-3 im Eingriff stehen. Die Gangstufe 6 ist eingerichtet durch ein an der Eingangswelle 18 angeordnetes Losrad 24-6, das mit einem an der Vorgelegewelle 22 angeordnetem Festrad 26-6 im Eingriff steht.

In dem in Fig. 2 gezeigten Radsatzlayout sind die Schaltkupplungspakete 70a und 70b an der Vorgelegewelle 22 angeordnet und die Schaltkupplungspakete 70c und 70d an der Eingangswelle 18. Das Schaltkupplungspaket 70a schaltet dabei die 7. Gangstufe sowie die Rückwärtsgangstufe. Das Schaltkupplungspaket 70b schaltet die 1. Gangstufe und die 2. Gangstufe. Das Schaltkupplungspaket 70c schaltet die 4. und die 3. Gangstufe und ist betätigbar mittels einer Schaltwippe 60-1, die an einer Umlenkvorrichtung 62-1 angeordnet ist. Die Schaltwippe 60-1 wird dabei durch eine Schaltstange 48 betätigt. Die Schaltkupplung 70d schaltet die 6. und die 5. Gangstufe. Die 5. Gangstufe ist als Direktgangstufe eingerichtet. Auch das Schaltkupplungspaket 70d ist mittels einer an einer Umlenkvorrichtung 62-2 angeordneten Schaltwippe 60-2 betätigbar.

In beiden Radsatzlayouts verläuft der Drehmomentfluss dabei, mit Ausnahme der Direktgangstufen, immer von der Getriebeeingangswelle 18 über die Vorgelegewelle 22 mittels des Abtriebs-Konstantenradsatzes 38 an die Getriebeausgangswelle 20.

In beiden Varianten sind die Gangstufen, die zwischen der 2ten Gangstufe und dem Getriebeausgang 52 angeordnet sind, austauschbar bzw. in beliebiger Reihenfolge anordenbar, und zwar durch entsprechendes Anordnen der Radsätze 24/26 und Schaltkupplungen 36 bzw. Schaltkupplungspakete 70.

Die Lagerplatte 56 und der Gehäusedeckel 58 sind vorzugsweise Gleichteile oder wenigstens aus dem gleichen Basisteil herstellbar.

Der Achsabstand zwischen der Eingangswelle 18 bzw. Ausgangswelle 20 und der Vorgelegewelle 22 ist bei beiden Varianten gleich und vorzugsweise so gewählt, dass auch für die 6-Gang-Variante hohe Drehmomentbereiche und Spreizungen möglich sind.

Sowohl die 6-Gang-Variante als auch die 7-Gang-Variante sind dabei sowohl für Fahrzeuge mit Dieselmotor als auch für Fahrzeuge mit Ottomotor verwendbar, wobei der Drehmoment Bereich vorzugsweise bei 200 Nm beginnt und bis 800 Nm reichen kann, insbesondere in Bereichen von 400 Nm bis 500 Nm liegen kann.

Obwohl die erste Variante und die zweite Variante als manuelle Getriebe 10 dargestellt sind, ist es auch denkbar, eine automatisierte Aktuierung der Getriebe 10 vorzusehen, ohne den Rahmen der Erfindung zu verlassen.

## Patentansprüche

1. Modulares Kraftfahrzeuggetriebe (10) für den Längseinbau in einem Kraftfahrzeug, mit
- einer Eingangswellenanordnung (18), die mit einem Ausgangsglied (68) einer Kupplungsanordnung (16) verbindbar ist,
- einer Ausgangswelle (20), die mit Antriebsrädern (30R, 30L) oder mit einem Differential (28) verbindbar ist,
- einer Vorgelegewelle (22), die parallel zu der Eingangswellenanordnung (18) angeordnet ist,
- einer Mehrzahl von Radsätzen (24/26, 24/64/66, 64/24) zum Einrichten von Gangstufen (R; 1; 2; 3; 4; 5; 6; 7), wobei die Radsätze (24/26, 24/64/66, 64/24) jeweils an der Eingangswellenanordnung (18) und der Vorgelegewelle (22) gelagert sind und diese miteinander verbinden und wobei die Radsätze (24/26, 24/64/66, 64/24) jeweils ein Festrad (26, 26-2, 26-3, 26-4, 26-5, 26-6, 64) und ein Losrad (24, 24-1, 24-2, 24-3, 24-4, 24-5, 24-6, 24-R) aufweisen und mittels jeweiliger Schaltkupplungen (36, 36-7, 36-R) zum Einrichten der Gangstufen (R, 1, 2, 3, 4, 5, 6, 7) schaltbar sind, wobei die Schaltkupplungen zumindest teilweise zu Schaltkupplungspaketen (70) zusammengefasst sind,
- einem Gehäuse (54), in dem die Wellen (18, 20, 22) und die Radsätze (24/26, 24/64/66, 64/24) aufgenommen sind, und
- einer Lageranordnung (32a, 32b, 32c, 32d, 32e, 32f, 32g) zum Lagern der Wellen (18, 20, 22) an dem Gehäuse (54), die so ausgebildet ist, dass mit dieser Lageranordnung (32a, 32b, 32c, 32d, 32e, 32f, 32g) gleichermaßen eine erste Variante und eine zweite Variante des Kraftfahrzeuggetriebes (10) aufbaubar ist, wobei das Kraftfahrzeuggetriebe (10) in der ersten Variante mit einer ersten Anzahl von Vorwärtsgangstufen (1; 2; 3; 4; 5; 6) aufgebaut ist und in der zweiten Variante mit einer weiteren Vorwärtsgangstufe (7) aufgebaut ist, **dadurch gekennzeichnet, dass** die Radsätze (24/26, 24/64/66, 64/24) und zugeordneten Schaltkupplungen und Schaltkupplungspakete (70, 70a, 70b, 70c, 70d) in beiden Varianten so gewählt sind, dass eine manuelle Schaltung möglich ist, so dass das Kraftfahrzeuggetriebe (10) in beiden Varianten als manuelles Getriebe mit einer H-Schaltvorrichtung (40) realisierbar ist, das nicht automatisch aktuiert ist, wobei die H-Schaltvorrichtung (40) einen Schalthebel (42) aufweist, der in einer Schaltkulisse (44) verschiebbar ist, wobei die Vorgelegewelle (22) und die Ausgangswelle (20) über einen Abtriebs-Konstantenradsatz (38) miteinander verbunden sind,
wobei ausschließlich der Abtriebs-Konstantenradsatz (38) und genau ein weiterer Radsatz (24/26), in axialer Richtung gesehen, in beiden Varianten zwischen einem getriebeausgangsseitigen Getriebedeckel (58) und einer Lagerplatte (56) angeordnet sind.

2. Modulares Kraftfahrzeuggetriebe (10) nach Anspruch 1, **dadurch gekennzeichnet, dass** in beiden Varianten eine Direktgangstufe (4, 5) eingerichtet ist.

3. Modulares Kraftfahrzeuggetriebe (10) nach Anspruch 1 oder 2, **dadurch gekennzeichnet, dass** der Getriebedeckel (58) des Gehäuses (54) und/oder die Lagerplatte (56) in beiden Varianten identisch sind.

4. Modulares Kraftfahrzeuggetriebe (10) nach Anspruch 1, 2 oder 3, **dadurch gekennzeichnet, dass** in der ersten Variante ein Rückwärtsgangstufen-Radsatz (24-R/64/ 66) der einem Eingang (50) des Kraftfahrzeuggetriebes (10) nächste Radsatz (24-R/64/66) ist und mittels einer Rückwärtsgangstufen-Schaltkupplung (36-R) betätigbar ist, die auf der dem Getriebeeingang (50) zugewandten Seite des Rückwärtsgangstufen-Radsatzes (24-R/64/66) angeordnet ist, wobei in der zweiten Variante ein Radsatz (24-7/26-7) für die weitere Vorwärtsgangstufe (7) auf der dem Getriebeeingang (50) zugewandten Seite einer Rückwärtsgangstufen-Schaltkupplung (36-R) angeordnet ist, wobei die Rückwärtsgangstufen-Schaltkupplung (36-R) mit einer weiteren Schaltkupplung (36-7) für die weitere Gangstufe (7) in ein Schaltkupplungspaket (70a) integriert ist.

5. Modulares Kraftfahrzeuggetriebe (10) nach einem der Ansprüche 1 bis 4, **dadurch gekennzeichnet, dass** in der ersten Variante folgende Bauelemente axial hintereinander angeordnet sind, von einem Getriebeeingang (50) aus gesehen: eine Rückwärtsgangstufen-Schaltkupplung (36-R), ein Rückwärtsgangstufen-Radsatz (24-R/64/66), ein Radsatz (24-1/64) für Gangstufe 1, ein Schaltkupplungspaket (70b) für Gangstufen 1 und 2, ein Radsatz (24-2/26-2) für Gangstufe 2, ein Radsatz (24-5/26-5) für Gangstufe 5, ein Schaltkupplungspaket (70c) für Gangstufen 5 und 6, ein Radsatz (24-6/26-6) für Gangstufe 6, ein Radsatz (24-3/26-3) für Gangstufe 3, ein Schaltkupplungspaket (70d) für Gangstufen 3 und 4, und der Abtriebs-Konstantenradsatz (38).

6. Modulares Kraftfahrzeuggetriebe (10) nach einem der Ansprüche 1 bis 5, **dadurch gekennzeichnet, dass** in der zweiten Variante folgende Bauelemente axial hintereinander angeordnet sind, von einem Getriebeeingang aus gesehen: ein Radsatz (24-7/26-7) für Gangstufe 7, ein Schaltkupplungspaket (70a) für Gangstufen 7 und die Rückwärtsgangstufe R, ein Rückwärtsgangstufen-Radsatz (24-R/64/66), ein Radsatz (24-1/64) für Gangstufe 1, ein Schaltkupplungspaket (70b) für Gangstufen 1 und 2, ein Radsatz (24-2/26-2) für Gangstufe 2, ein Radsatz (24-4/26-4) für Gangstufe 4, ein Schaltkupplungspaket (70c) für Gangstufen 4 und 3, ein Radsatz (24-3/26-3) für Gangstufe 3, ein Radsatz (24-6/26-6) für Gangstufe 6, ein Schaltkupplungspaket (70d) für Gangstufen 6 und 5, und der Abtriebs-Konstantenradsatz (38).

7. Modulares Kraftfahrzeuggetriebe (10) nach einem der Ansprüche 1 bis 6, **dadurch gekennzeichnet, dass** wenigstens ein Schaltkupplungspaket (70) mittels einer Schaltgabel (46) betätigbar ist und/oder wenigstens ein Schaltkupplungspaket (70) mittels einer Schaltwippe (60) betätigbar ist.

8. Modulares Kraftfahrzeuggetriebe (10) nach einem der Ansprüche 1 bis 7, **dadurch gekennzeichnet, dass** ein Radsatz (24-1/64) für die Gangstufe 1, ein Rückwärtsgangradsatz (24-R/64/66) und vorzugsweise ein Radsatz (24-2/26-2) für die Gangstufe 2 in beiden Varianten durch Gleichteile gebildet sind.

## Claims

1. Modular motor vehicle transmission (10) for longitudinal installation in a motor vehicle, with
- an input shaft arrangement (18) which can be connected to an output member (68) of a clutch arrangement (16),
- an output shaft (20) which can be connected to drive wheels (30R, 30L) or to a differential (28),
- a countershaft (22) which is arranged parallel to the input shaft arrangement (18),
- a plurality of gear sets (24/26, 24/64/66, 64/24) for setting up gear stages (R; 1; 2; 3; 4; 5; 6; 7), the gear sets (24/26, 24/64/66, 64/24) being mounted in each case on the input shaft arrangement (18) and the countershaft (22) and connecting them to one another, and the gear sets (24/26, 24/64/66, 64/24) in each case having a fixed gear (26, 26-2, 26-3, 26-4, 26-5, 26-6, 64) and a movable gear (24, 24-1, 24-2, 24-3, 24-4, 24-5, 24-6, 24-R) and being capable of being selected by means of respective shifting clutches (36, 36-7, 36-R) in order to set up the gear stages (R, 1, 2, 3, 4, 5, 6, 7), the shifting clutches being combined at least partially to form shifting clutch packs (70),
- a housing (54), in which the shafts (18, 20, 22) and the gear sets (24/26, 24/64/66, 64/24) are received, and
- a bearing arrangement (32a, 32b, 32c, 32d, 32e, 32f, 32g) for mounting the shafts (18, 20, 22) on the housing (54), which bearing arrangement (32a, 32b, 32c, 32d, 32e, 32f, 32g) is configured in such a way that a first variant and a second variant of the motor vehicle transmission (10) can equally be constructed by way of the said bearing arrangement (32a, 32b, 32c, 32d, 32e, 32f, 32g), the motor vehicle transmission (10) being constructed in the first variant with a first number of forward gear stages (1; 2; 3; 4; 5; 6) and being constructed in the second variant with a further forward gear stage (7), **characterized in that** the gear sets (24/26, 24/64/66, 64/24) and associated shifting clutches and shifting clutch packs (70, 70a, 70b, 70c, 70d) are selected in the two variants in such a way that a manual shifting operation is possible, with the result that the motor vehicle transmission (10) can be realised in the two variants as a manual transmission with an H-gate shifting apparatus (40), which manual transmission is not actuated automatically, the H-gate shifting apparatus (40) having a gearshift lever (42) which can be displaced in a shift guide plate (44), the countershaft (22) and the output shaft (20) being connected to one another via an output constant gear set (38), exclusively the output constant gear set (38) and precisely one further gear set (24/26) being arranged in the two variants between a transmission output-side transmission cover (58) and a bearing plate (56), as viewed in the axial direction.

2. Modular motor vehicle transmission (10) according to Claim 1, **characterized in that** a direct gear stage (4, 5) is set up in the two variants.

3. Modular motor vehicle transmission (10) according to Claim 1 or 2, **characterized in that** the transmission cover (58) of the housing (54) and/or the bearing plate (56) are/is identical in the two variants.

4. Modular motor vehicle transmission (10) according to Claim 1, 2 or 3, **characterized in that**, in the first variant, a reverse gear stage gear set (24-R/64/66) is the closest gear set (24-R/64/66) to an input (50) of the motor vehicle transmission (10) and can be actuated by means of a reverse gear stage shifting clutch (36-R) which is arranged on that side of the reverse gear stage gear set (24-R/64/66) which faces the transmission input (50), a gear set (24-7/26-7) for the further forward gear stage (7) being arranged in the second variant on that side of a reverse gear stage shifting clutch (36-R) which faces the transmission input (50), the reverse gear stage shifting clutch (36-R) being integrated with a further shifting clutch (36-7) for the further gear stage (7) into a shifting clutch pack (70a).

5. Modular motor vehicle transmission (10) according to one of Claims 1 to 4, **characterized in that**, in the first variant, the following components are arranged axially behind one another, as viewed from a transmission input (50): a reverse gear stage shifting clutch (36-R), a reverse gear stage gear set (24-R/64/66), a gear set (24-1/64) for gear stage 1, a shifting clutch pack (70b) for gear stages 1 and 2, a gear set (24-2/26-2) for gear stage 2, a gear set (24-5/26-5) for gear stage 5, a shifting clutch pack (70c) for gear stages 5 and 6, a gear set (24-6/26-6) for gear stage 6, a gear set (24-3/26-3) for gear stage 3, a shifting clutch pack (70d) for gear stages 3 and 4, and the output constant gear set (38) .

6. Modular motor vehicle transmission (10) according to one of Claims 1 to 5, **characterized in that**, in the second variant, the following components are arranged axially behind one another, as viewed from a transmission input: a gear set (24-7/26-7) for gear stage 7, a shifting clutch pack (70a) for gear stages 7 and the reverse gear stage R, a reverse gear stage gear set (24-R/64/66), a gear set (24-1/64) for gear stage 1, a shifting clutch pack (70b) for gear stages 1 and 2, a gear set (24-2/26-2) for gear stage 2, a gear set (24-4/26-4) for gear stage 4, a shifting clutch pack (70c) for gear stages 4 and 3, a gear set (24-3/26-3) for gear stage 3, a gear set (24-6/26-6) for gear stage 6, a shifting clutch pack (70d) for gear stages 6 and 5, and the output constant gear set (38).

7. Modular motor vehicle transmission (10) according to one of Claims 1 to 6, **characterized in that** at least one shifting clutch pack (70) can be actuated by means of a selector fork (46) and/or at least one shifting clutch pack (70) can be actuated by means of a rocker switch (60).

8. Modular motor vehicle transmission (10) according to one of Claims 1 to 7, **characterized in that** a gear set (24-1/64) for the gear stage 1, a reverse gear set (24-R/64/66) and preferably a gear set (24-2/26-2) for the gear stage 2 are formed by way of identical parts in the two variants.

## Revendications

1. Boîte de vitesses modulaire de véhicule automobile (10) devant être montée longitudinalement dans un véhicule automobile, comprenant
- un agencement d'arbre d'entrée (18) qui peut être connecté à un organe de sortie (68) d'un agencement d'embrayage (16),
- un arbre de sortie (20) qui peut être connecté à des roues d'entraînement (30R, 30L) ou à un différentiel (28),
- un arbre intermédiaire (22) qui est disposé parallèlement à l'agencement d'arbre d'entrée (18),
- une pluralité de jeux de pignons (24/26, 24/64/66, 64/24) pour configurer des rapports de vitesses (R ; 1 ; 2 ; 3 ; 4 ; 5 ; 6 ; 7), les jeux de pignons (24/26, 24/64/66, 64/24) étant à chaque fois supportés sur l'agencement d'arbre d'entrée (18) et l'arbre intermédiaire (22) et reliant ceux-ci l'un à l'autre et les jeux de pignons (24/26, 24/64/66, 64/24) présentant à chaque fois un pignon fixe (26, 26-2, 26-3, 26-4, 26-5, 26-6, 64) et un pignon fou (24, 24-1, 24-2, 24-3, 24-4, 24-5, 24-6, 24-R) et pouvant être commutés au moyen d'embrayages respectifs (36, 36-7, 36-R) pour configurer les rapports de vitesses (R ; 1 ; 2 ; 3 ; 4 ; 5 ; 6 ; 7), les embrayages étant au moins en partie réunis en paquets d'embrayages (70),
- un boîtier (54) dans lequel sont reçus les arbres (18, 20, 22) et les jeux de pignons (24/26, 24/64/66, 64/24), et
- un agencement de palier (32a, 32b, 32c, 32d, 32e, 32f, 32g) pour supporter les arbres (18, 20, 22) sur le boîtier (54), lequel est réalisé de telle sorte que l'on puisse construire avec cet agencement de palier (32a, 32b, 32c, 32d, 32e, 32f, 32g) dans la même mesure une première variante et une deuxième variante de la boîte de vitesses de véhicule automobile (10), la boîte de vitesses de véhicule automobile (10), dans la première variante, étant construite avec un premier nombre de rapports de vitesses de marche avant (1 ; 2 ; 3 ; 4 ; 5 ; 6) et, dans la deuxième variante, étant construite avec un rapport de vitesse de marche avant supplémentaire (7),
**caractérisée en ce que**
les jeux de pignons (24/26, 24/64/66, 64/24) et les embrayages associés et les paquets d'embrayages (70, 70a, 70b, 70c, 70d) dans les deux variantes sont choisis de telle sorte qu'un changement de vitesses manuelles soit possible de sorte que la boîte de vitesses de véhicule automobile (10) puisse être réalisée dans les deux variantes en tant que boîte de vitesses manuelles avec un dispositif de sélection de vitesses en H (40) qui n'est pas actionné de manière automatique, le dispositif de sélection de vitesses en H (40) présentant un levier de sélection (42) qui peut être déplacés dans une coulisse de changement de vitesses (44), l'arbre intermédiaire (22) et l'arbre de sortie (20) étant connectés l'un à l'autre par le biais d'un jeu de pignons à constante de prise de force (38), exclusivement le jeu de pignons à constante de prise de force (38) et précisément un jeu de pignons supplémentaire (24/26), vu dans la direction axiale, étant disposés dans les deux variantes entre un couvercle de boîte de vitesses (58) du côté de la sortie de la boîte de vitesses et un plateau de palier (56).

2. Boîte de vitesses modulaire de véhicule automobile (10) selon la revendication 1,
**caractérisée en ce que** dans les deux variantes, un rapport de vitesse direct (4, 5) est prévu.

3. Boîte de vitesses modulaire de véhicule automobile (10) selon la revendication 1 ou 2,
**caractérisée en ce que** le couvercle de boîte de vitesses (58) du boîtier (54) et/ou le plateau de palier (56) sont identiques dans les deux variantes.

4. Boîte de vitesses modulaire de véhicule automobile (10) selon la revendication 1, 2 ou 3, **caractérisée en ce que** dans la première variante, un jeu de pignons de rapport de vitesse de marche arrière (24-R/64/66) est le jeu de pignons (24-R/64/66) le plus proche d'une entrée (50) de la boîte de vitesses de véhicule automobile (10), et peut être actionné au moyen d'un embrayage de rapport de vitesse de marche arrière (36-R) qui est disposé du côté du jeu de pignons de rapport de vitesse de marche arrière (24-R/64/66) tourné vers l'entrée de la boîte de vitesses (50),
dans la deuxième variante, un jeu de pignons (24-7/26-7) pour le rapport de vitesse de marche avant supplémentaire (7) étant disposé du côté d'un embrayage de rapport de vitesse de marche arrière (36-R) tourné vers l'entrée de la boîte de vitesses (50), l'embrayage de rapport de vitesse de marche arrière (36-R) étant intégré avec un embrayage supplémentaire (36-7) pour le rapport de vitesse supplémentaire (7) dans un paquet d'embrayages (70a).

5. Boîte de vitesses modulaire de véhicule automobile (10) selon l'une quelconque des revendications 1 à 4,
**caractérisée en ce que** dans la première variante, les composants suivants sont disposés axialement les uns derrière les autres, vu à partir d'une entrée de la boîte de vitesses (50) : un embrayage de rapport de vitesse de marche arrière (36-R), un jeu de pignons de rapport de vitesse de marche arrière (24-R/64/66), un jeu de pignons (24-1/64) pour le rapport de vitesse 1, un paquet d'embrayages (70b) pour les rapports de vitesses 1 et 2, un jeu de pignons (24-2/26-2) pour le rapport de vitesse 2, un jeu de pignons (24-5/26-5) pour le rapport de vitesse 5, un paquet d'embrayages (70c) pour les rapports de vitesses 5 et 6, un jeu de pignons (24-6/26-6) pour le rapport de vitesse 6, un jeu de pignons (24-3/26-3) pour le rapport de vitesse 3, un paquet d'embrayages (70d) pour les rapports de vitesses 3 et 4, et le jeu de pignons à constante de prise de force (38).

6. Boîte de vitesses modulaire de véhicule automobile (10) selon l'une quelconque des revendications 1 à 5,
**caractérisée en ce que** dans la deuxième variante, les composants suivants sont disposés axialement les uns derrière les autres, vu à partir d'une entrée de la boîte de vitesses : un jeu de pignons (24-7/26-7) pour le rapport de vitesse 7, un paquet d'embrayages (70a) pour le rapport de vitesse 7 et pour le rapport de vitesse de marche arrière R, un jeu de pignons de rapport de vitesse de marche arrière (24-R/64/66), un jeu de pignons (24-1/64) pour le rapport de vitesse 1, un paquet d'embrayages (70b) pour les rapports de vitesses 1 et 2, un jeu de pignons (24-2/26-2) pour le rapport de vitesse 2, un jeu de pignons (24-4/26-4) pour le rapport de vitesse 4, un paquet d'embrayages (70c) pour les rapports de vitesses 4 et 3, un jeu de pignons (24-3/26-3) pour le rapport de vitesse 3, un jeu de pignons (24-6/26-6) pour le rapport de vitesse 6, un paquet d'embrayages (70d) pour les rapports de vitesses 6 et 5, et le jeu de pignons à constante de prise de force (38).

7. Boîte de vitesses modulaire de véhicule automobile (10) selon l'une quelconque des revendications 1 à 6,
**caractérisée en ce qu'**au moins un paquet d'embrayages (70) peut être actionné au moyen d'une fourchette de sélection (46) et/ou au moins un paquet d'embrayages (70) peut être actionné au moyen d'une bascule de sélection (60).

8. Boîte de vitesses modulaire de véhicule automobile (10) selon l'une quelconque des revendications 1 à 7,
**caractérisée en ce qu'**un jeu de pignons (24-1/64) pour le rapport de vitesse 1, un jeu de pignons de vitesse de marche arrière (24-R/64/66) et de préférence un jeu de pignons (24-2/26-2) pour le rapport de vitesse 2 sont formés dans les deux variantes par des pièces identiques.
